# EUROPEAN PATENT APPLICATION

(11) **EP 2 267 791 A2**
(43) Date of publication of application: **29.12.2010**
(21) Application number: 09705833.3
(22) Date of filing: 29.01.2009
(51) Int. Cl.: H01L 31/042

(54) **TOUCH SENSING APPARATUS WITH PARASITIC CAPACITANCE PREVENTION STRUCTURE**

(30) Priority: 29.01.2008 KR 20080008894
(71) Applicant: Melfas, Seoul 153-777 (KR)
(72) Inventor: MIN, Dongjin, Seoul 151-772 (KR)
(74) Representative: Witte, Weller & Partner
(86) International application number: PCT/KR2009/000430
(87) International publication number: WO 2009/096712

(57) **Abstract**

The present invention relates to a touch sensing apparatus. The touch sensing apparatus of the present invention includes a first sensing electrode arranged on a rear surface of a window to sense the touch of a user on the window covering a display screen, a second sensing electrode superimposed onto the first sensing electrode with an insulating layer interposed therebetween, and a buffer for transmitting voltage of the first sensing electrode side to the second sensing electrode side. The touch sensing apparatus of the present invention is capable of effectively cutting off noise signals generated from a display module and keeping touch sensitivity at a high level.

## Description

### Technical Field

The present invention relates to a touch sensing apparatus, and more particularly, to a touch sensing apparatus with a noise signal shielding structure and a parasitic capacitance prevention structure.

### Background Art

A touch sensing apparatus may be used as an input apparatus to sense a touch of a user applied to a specific position. Generally, the touch sensing apparatus may be configured to sense a touch based on a change in electrical characteristics caused by the touch of the user.

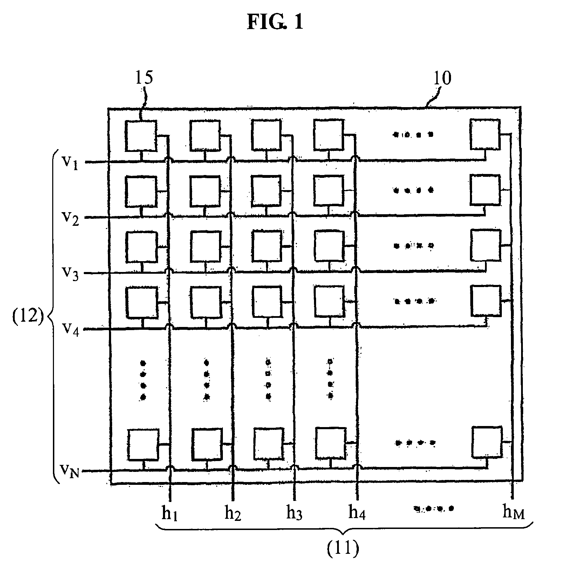

FIG. 1 illustrates an example of a plane structure of a conventional touch sensing panel. The touch sensing panel of FIG. 1 includes a window 10 to accommodate a touch input, and sensing electrodes 15 that are arranged in regular intervals on a rear surface of the window 10. Each of the sensing electrodes 15 of FIG. 1 may be connected to one of M signal lines 11, and one of N signal lines 12. Here, the M signal lines 11 and the N signal lines 12 may be respectively used to identify horizontal positions and vertical positions where touches occur.

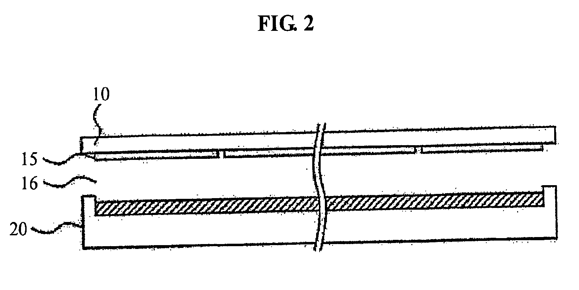

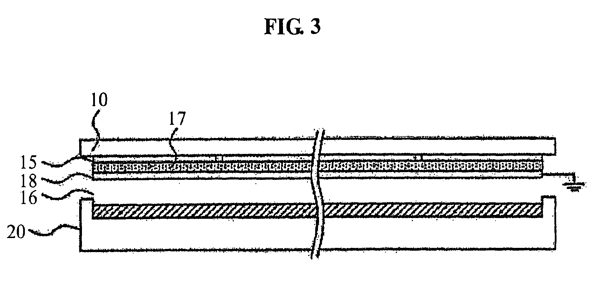

As shown in FIGS. 2 and 3, a touch sensing panel may be implemented as a touch screen panel that is installed on a front surface of a display apparatus, such as a Liquid Crystal Display (LCD) module 20. Here, a sensing electrode 15 of the touch screen panel may be exposed to a noise signal generated from the LCD module 20. The noise signal may have influence on a performance of a touch screen, for example, may cause the touch screen to incorrectly recognize a touch of a user, or to obtain inaccurate touch position information.

To prevent the noise signal, the touch screen panel may be mounted away from the LCD module 20 by a predetermined interval, as shown in FIG. 2. In other words, the noise signal may be attenuated by an air gap 16. Since an influence of the noise signal is reduced as the air gap 16 increases in size, ensuring a large air gap 16 may be advantageous in blocking noise. However, actually, there are many cases where it is impossible to ensure a sufficient air gap 16 to block the noise signal due to a limitation in design based on a slim design of an electronic device.

Accordingly, to more closely shield against the noise signal, a scheme of providing a shielding layer 18 as shown in FIG. 3 is becoming widespread. Generally, the shielding layer 18 is provided on a rear surface of an insulating layer 17, and is configured to cover an entire display screen of the LCD module 20. Since the shielding layer 18 is connected to a ground pattern of an electronic device, an electric potential of the shielding layer 18 may be maintained at a ground level, regardless of a noise signal generated from the LCD module 20. Accordingly, the air gap 16 may be reduced in size compared with that of FIG. 2, or may be omitted. However, when the shielding layer 18 is connected to the ground, a parasitic capacitance may be formed between the sensing electrode 15 and the shielding layer 18, and may have influence on a touch sensing performance. The parasitic capacitance may greatly reduce a touch sensitivity in a capacitive-type touch screen, in particular.

Additionally, a parasitic capacitance may be formed between two neighboring sensing electrodes 15. For example, it is assumed that capacitances of the sensing electrodes 15 are respectively measured in sequence. In this example, when a capacitance of one of the sensing electrodes 15 is measured, another neighboring sensing electrode 15 may be switched to be connected to the ground. A parasitic capacitance may be formed as a coupling component between the sensing electrode 15 of which the capacitance is measure, and the sensing electrode 15 connected to the ground. The parasitic capacitance may also reduce the touch sensitivity, similar to the above-described parasitic capacitance formed between the sensing electrode 15 and the shielding layer 18.

### Detailed description of the Invention

### Technical Goals

Hereinafter, a touch sensing apparatus and a noise signal shielding apparatus according to the present invention will be described with reference to the accompanying drawings. In the following description, like or corresponding elements are denoted by like reference numerals, and overlapping descriptions will be omitted.

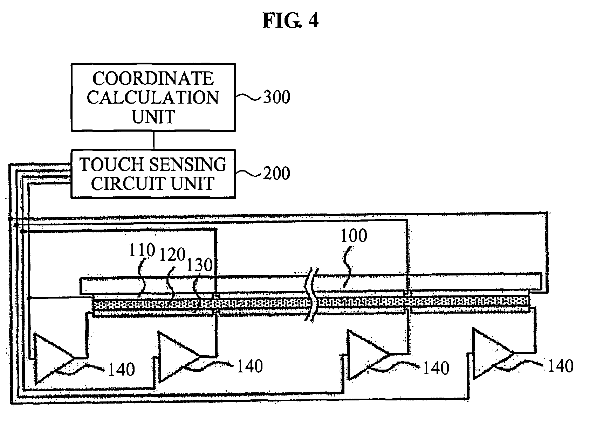

FIG. 4 illustrates a panel section structure and a functional configuration of a touch sensing apparatus according to an embodiment of the present invention. For convenience of description, an adhesive layer used to deposit sensing electrodes 110 and shielding electrodes 130 is not shown in FIG. 4.

The touch sensing apparatus of FIG. 4 includes the sensing electrodes 110 formed on a rear surface of a window 100. The window 100 may be formed of a dielectric, such as a tempered glass or acrylic, and a front surface of the window 100 may be exposed to an electronic device, to accommodate a touch of a user and to protect the sensing electrodes 110 and a display apparatus against an external environment.

The sensing electrodes 110 may be formed of transparent conductive materials such as an Indium Tin Oxide (ITO), an Indium Zinc Oxide (IZO), a Zinc Oxide (ZnO), and the like. When the plurality of sensing electrodes 110 are included as shown in FIG. 4, or when processing into a specific shape is required, the sensing electrodes 110 may be manufactured by patterning by a photolithography scheme. The sensing electrodes 110 may be attached to the rear surface of the window 100 using an adhesive such as an Optically Clear Adhesive (OCA).

The sensing electrodes 110 may be electrically connected to a touch sensing circuit unit 200. When a user touches a specific position on the front surface of the window 100, the touch sensing circuit unit 200 may sense the touch of the user based on a change in electrical characteristics occurring on a sensing electrode 110 that is arranged on a position corresponding to the touched position. Accordingly, the touch sensing circuit unit 200 may include an electrical circuit including a sample-and-hold circuit, an Analog-to-Digital Converter (ADC), or various registers.

The touch sensing circuit unit 200 may acquire, from each of the sensing electrodes 110, data regarding whether a touch is input, an intensity of a touch, and a touch position, and may transfer the acquired data to a coordinate calculation unit 300. The coordinate calculation unit 300 may include a calculation circuit to calculate the touch position based on the data received from the touch sensing circuit unit 200.

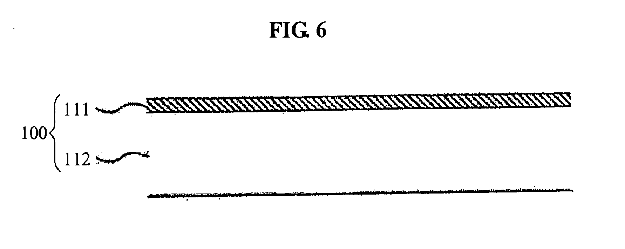

FIG. 6 illustrates an example of an actual configuration of a sensing electrode 110. As shown in FIG. 6, the sensing electrode 110 includes a transparent basement membrane 112 formed of insulating materials such as polyethylene terephthalate (PET), and a transparent conductive layer 111 formed on a surface of the transparent basement membrane 112. The transparent conductive layer 111 may be formed of transparent conductive materials, such as an ITO, an IZO, and a ZnO. The transparent conductive layer 111 may be attached onto the window 100, or the transparent basement membrane 112 may be attached onto the window 100. A section structure of FIG. 6 and the above description may equally be applied to the shielding electrode 130.

An insulating layer 120 may be provided on a rear surface of the sensing electrodes 110. The insulating layer 120 may be formed of insulating materials such as PET. A basement membrane 112 of either the sensing electrode 110 or the shielding electrode 130 may be used as the insulating layer 120, instead of the insulating layer 120 being deposited between the sensing electrodes 110 and the shielding electrodes 130.

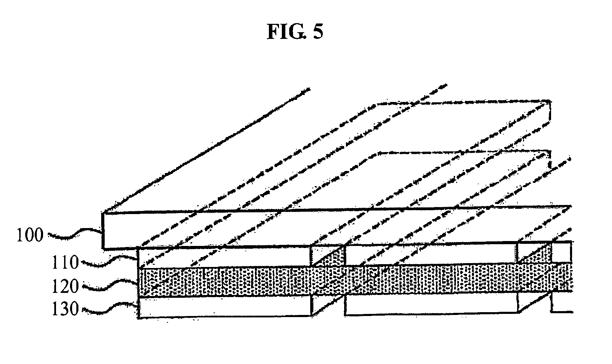

As shown in FIG 5, the shielding electrodes 130 may be formed on a rear surface of the insulating layer 120, in identical configurations and in identical positions as the sensing electrodes 110, so that the shielding electrodes 130 may be superimposed onto the sensing electrodes 110 with the insulating layer 120 therebetween. The shielding electrodes 130 may be formed of transparent conductive materials such as an ITO or the like, in the same manner as the sensing electrodes 110. The sensing electrodes 110 and the shielding electrodes 130 corresponding to the sensing electrodes 110 may be respectively connected to input ports and output ports of buffers 140 having a predetermined gain. The buffer 140 may transfer a voltage of the sensing electrode 110 to the shielding electrode 130 corresponding to the sensing electrode 110, so that the voltage of the sensing electrode 110 may be maintained to be equal to a voltage of the shielding electrode 130.

Since the sensing electrode 110 and the shielding electrode 130 that correspond to each other are maintained at the same voltage level, a parasitic capacitance may not be formed between the sensing electrode 110 and the shielding electrode 130. The buffer 140 may transfer a voltage of the input port to the output port, however, may not transfer a voltage of the output port to the input port. Accordingly, the buffer 140 may function to prevent the sensing electrode 110 from being affected by a noise signal generated from a Liquid Crystal Display (LCD) module located on a rear surface of the touch sensing apparatus.

A gain of the buffer 140 may be set to have various values as needed. A unit gain buffer 140 having a gain of '1' may be used to transfer the voltage of the sensing electrode 110 to the shielding electrode 130. Another buffer 140 having a gain other than '1' may be used. In one embodiment, a buffer 140 having a gain of '0.5' may be used to offset only half of a parasitic capacitance formed between the sensing electrode 110 and the shielding electrode 130. In another embodiment, a buffer 140 having a gain of '0.7' may be arranged, to improve a stability of the touch sensing apparatus.

While FIG. 4 illustrates an example of using unit gain buffers 140, a buffer having a gain other than '1' may be used as needed, as described above. When the buffer having a gain other than '1' is used, a voltage of the shielding electrode 130 may be maintained at a fixed level by a voltage of the sensing electrode 110, and an influence by the noise signal may not be transferred to the sensing electrodes 110, thereby obtaining an effect of shielding against a noise signal generated by a display apparatus.

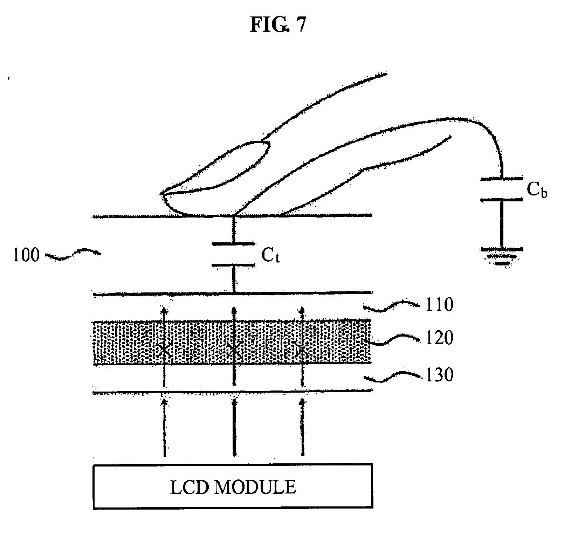

FIG. 7 illustrates an example of a sensing principle applicable to the touch sensing apparatus according to the present invention, to explain the effect of shielding against the noise signal. As shown in FIG. 7, a capacitance formed when a part of a touch object, for example a fingertip of a user, touches a specific position on the window 100 may be modeled as a capacitance Cₜ and a human body capacitance C_{b}. Here, the capacitance Cₜ may be formed in a thickness direction of the window 100, using, as two electrode plates, the sensing electrode 110 corresponding to the specific position and a surface touched by the touch object, and using the window 100 as a dielectric. The human body capacitance C_{b} may be connected in series to the capacitance Cₜ, and may be connected to the ground. Additionally, a noise signal generated from an LCD module 20 located on a rear surface of a touch screen panel may be shielded by the shielding electrode 130 and accordingly, may not have influence on a capacitance formed between the sensing electrode 110 and the touch object. Thus, the touch sensing circuit unit 200 connected to the sensing electrode 110 may stably sense a capacitance change caused by the capacitances Cₜ and C_{b}, regardless of the noise signal.

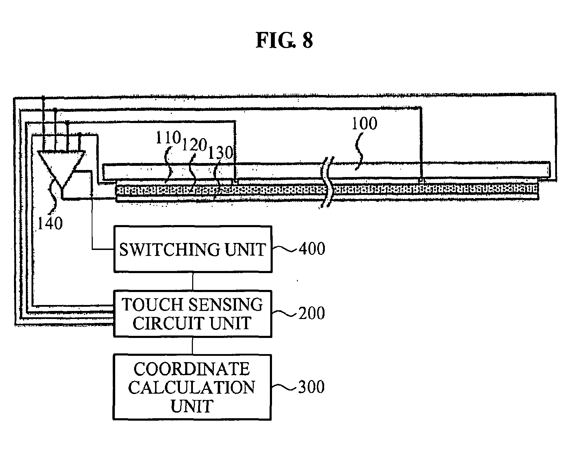

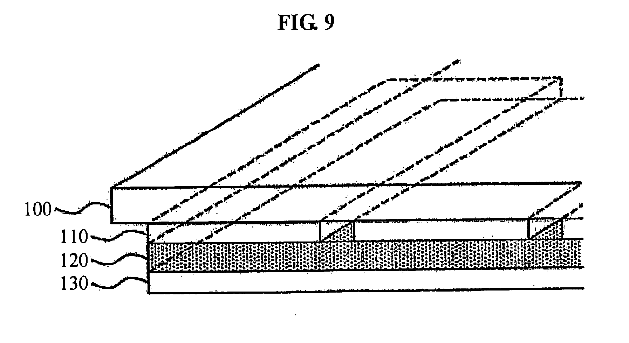

FIG. 8 illustrates a panel section structure and a functional configuration of a touch sensing apparatus according to another embodiment of the present invention. In the configuration of FIG. 4, the shielding electrodes 130 are provided in the same configuration as the sensing electrodes 110, and a number of the shielding electrodes 130 is equal to a number of the sensing electrodes 110. However, in the configuration of FIG. 8, a single shielding electrode 130 may be provided to be superimposed onto a plurality of sensing electrodes 110. For example, a single shielding electrode 130 may be arranged to cover an entire display screen, so that the shielding electrode 130 may be superimposed onto all of the plurality of sensing electrodes 110. Comparing an enlarged perspective diagram of FIG. 9 with an enlarged perspective diagram of FIG. 5, it may be seen that a single shielding electrode 130 may be formed over an area occupied by several sensing electrodes 110.

Additionally, in the present embodiment, a buffer 140 of FIG. 8 may be configured to selectively connect one of the plurality of sensing electrodes 110 to the shielding electrode 130, instead of being individually included for each of the sensing electrodes 110. To perform the selectively connecting, the buffer 140 of FIG. 8 may include a multiplexer.

For example, a switching unit 400 of FIG. 8 may output a selection signal to select whether to transfer one of voltages of the plurality of sensing electrodes 110 connected to an input port of the buffer 140 to the shielding electrode 130 connected to an output port of the buffer 140. The selection signal may be input to a selection signal input port of the buffer 140.

In the configuration of FIG. 8, a touch sensing circuit unit 200 may sequentially sense touches for each of the sensing electrodes 110. When sensing a touch with respect to a specific sensing electrode 110, the touch sensing circuit unit 200 may control the selection unit 400 to output the selection signal so that a voltage of the specific sensing electrode 110 may be transferred to the shielding electrode 130.

In the present embodiment, a number of buffers 140 may be reduced compared with when a buffer 140 and a shielding electrode 130 correspond one-to-one to a sensing electrode 110, thereby reducing manufacturing costs. Additionally, an area occupied by each unit gain buffer 140 and each connection line in a touch sensing apparatus module may be reduced and accordingly, it is possible to realize compactness of the overall configuration of the touch sensing apparatus.

The buffer 140 and the switching unit 400 may be integrated in a single chip configuration. When the two elements are provided in a single chip, a size of the touch sensing apparatus may be further reduced. Here, the chip may include a sensing channel terminal, together with an output terminal. The sensing channel terminal may be connected to each of the sensing electrodes 110, and the output terminal may be used to output a voltage of a selected sensing electrode 110 passing through the buffer 140. In the present embodiment, it is also possible to reduce a number of output terminals required when the buffer 140 and the switching unit 400 are integrated in a single chip configuration.

As described above, features of the configuration of FIG. 8 have been described based on a difference from the configuration of FIG. 4. Common parts between the configurations of FIGS. 4 and 8 have been described above in detail and accordingly, the above description may also be applied to the embodiment of FIG. 8, or vice versa.

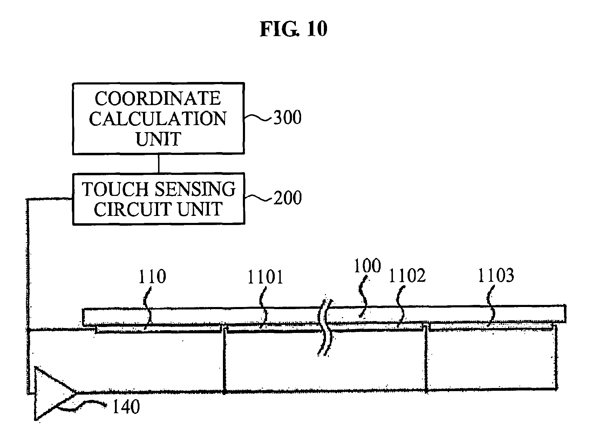

FIG. 10 illustrates a panel section structure, and a relationship between function blocks of a touch sensing apparatus according to still another embodiment of the present invention. As described above in the embodiments of FIGS. 4 and 8, the input port of the buffer 140 may be connected to the sensing electrode 110, and the output port of the buffer 140 may be connected to the shielding electrode 130 arranged in a different layer from the sensing electrode 110. However, as shown in FIG. 10, an input port of a buffer 140 may be connected to a sensing electrode 110, and an output port of the buffer 140 may be connected to each of other sensing electrodes 1101, 1102, and 1103.

When a capacitance change with respect to the sensing electrode 110 is sensed, the above configuration may prevent a parasitic capacitance component from being formed between the sensing electrode 110 and the sensing electrodes 1101, 1102, and 1103. In particular, such an effect of preventing the parasitic capacitance component may be greatly exerted between the sensing electrode 110 and the sensing electrode 1101 that is located adjacent to the sensing electrode 110. In other words, a parasitic capacitance may be prevented from being formed between the sensing electrodes 110 and 1101, since electric potentials of the sensing electrodes 110 and 1101 may be maintained at a same level by the buffer 140.

While the buffer 140 of FIG. 10 transfers a voltage of only the sensing electrode 110 to the sensing electrodes 1101, 1102, and 1103, another buffer 140 having the same function as the buffer 140 of FIG. 10 may be provided with respect to all of the sensing electrodes 110, 1101, 1102, and 1103. Here, a switching circuit may be provided to connect an input port and an output port of a single buffer 140 to all of the sensing electrodes 110, 1101, 1102, and 1103, and to control a connection state between the buffer 140 and the sensing electrodes 110, 1101, 1102, and 1103. Accordingly, when a capacitance change is being measured for the sensing electrode 110, the voltage of the sensing electrode 110 may be transferred to the sensing electrode 1101. Thus, it is possible to prevent occupation of a large circuit area used to provide a buffer 140 for each of the sensing electrodes 110, 1101, 1102, and 1103.

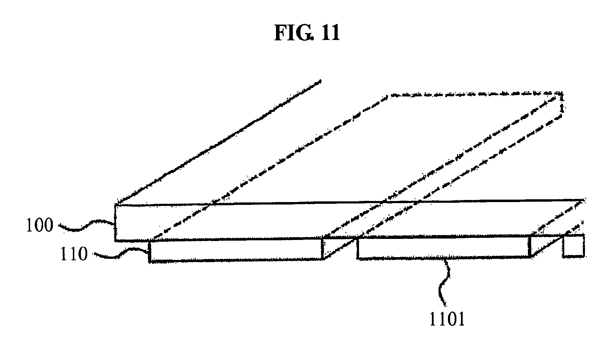

FIG. 11 is an enlarged perspective diagram stereoscopically illustrating the configuration of FIG. 10. While the above-described shielding electrode 130 is not shown in FIG. 11, a configuration including a shielding electrode 130 configured as shown in FIG. 4 or 8, and a unit gain buffer 140 configured as shown in FIG. 4 or 8 to transfer voltages of the sensing electrodes 110, 1101, 1102, and 1103 to the shielding electrode 130 may also be added to the present embodiment. Specifically, the plurality of sensing electrodes 110, 1101, 1102, and 1103 arranged in a same layer may be connected to each other through the buffer 140 and thus, it is possible to prevent an occurrence of a parasitic capacitance. Additionally, it is possible to shield against noise transferred from a display module by separately arranging a shielding electrode 130 in a different layer from the sensing electrodes 110, 1101, 1102, and 1103.

The configuration of the touch sensing apparatus according to the present invention has been described based on the panel section structure. In the touch sensing apparatus, a sensing electrode 110 may be formed with a tetragonal shape, for example the sensing electrode 15 of the conventional touch sensing panel of FIG. 1, or may have various shapes, such as a triangle, or a lozenge. Additionally, various plane structures may be applied to the touch sensing apparatus. For example, lattices may be arranged in horizontal and vertical directions, in the same manner as the sensing electrodes 15 of FIG. 1, and a single sensing electrode 110 may be provided to cover an entire display screen. In other words, it is possible to freely select the shape, the number, and the arrangement of the sensing electrode 110 of the touch sensing apparatus, without departing from the scope of the present invention.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

### Brief Description of Drawings

FIG. 1 schematically illustrates a plane structure of a conventional touch sensing apparatus.
FIG. 2 schematically illustrates a section structure of a conventional touch sensing apparatus.
FIG. 3 schematically illustrates a section structure of another conventional touch sensing apparatus.
FIG. 4 illustrates a section structure and a functional configuration of a touch sensing apparatus according to an embodiment of the present invention.
FIG. 5 is an enlarged perspective diagram illustrating a panel lamination structure of the touch sensing apparatus of FIG. 4.
FIG. 6 is a cross-section diagram illustrating a lamination structure of a sensing electrode.
FIG. 7 illustrates an example of a touch sensing principle applicable to a touch sensing apparatus according to the present invention, and an example of a noise signal shielding effect by the touch sensing apparatus.
FIG. 8 illustrates a section structure and a functional configuration of a touch sensing apparatus according to another embodiment of the present invention.
FIG. 9 is an enlarged perspective diagram illustrating a panel lamination structure of the touch sensing apparatus of FIG. 8.
FIG. 10 illustrates a section structure and a functional configuration of a touch sensing apparatus according to still another embodiment of the present invention.
FIG. 11 is an enlarged perspective diagram illustrating a panel lamination structure of the touch sensing apparatus of FIG. 10.

### Industrial Applicability

According to the present invention, a touch sensing apparatus may cut off noise signals generated from a display apparatus, such as an LCD module, and may maintain a touch sensitivity at a high level.

Additionally, according to the present invention, it is possible to achieve slimness of an electronic device equipped with a touch sensing apparatus, without sacrificing a touch sensitivity, thereby satisfying user's demand for a slim design.

Moreover, according to the present invention, a single buffer may be shared by a plurality of sensing electrodes and thus, limited resources may be effectively used even when a number of connection lines to be arranged or a number of buffers is limited, thereby obtaining a noise signal shielding effect.

Furthermore, according to the present invention, there may be provided a touch sensing apparatus that may eliminate an influence by a parasitic capacitance formed as a coupling component between neighboring sensing electrodes, to exactly recognize a touch position without reducing a touch sensitivity.

## Claims

1. A touch sensing apparatus, comprising:
a first sensing electrode where a touch generates a sensing signal;
a second sensing electrode superimposed onto the first sensing electrode with an insulating layer interposed between the first sensing electrode and the second sensing electrode; and
a buffer to electrically connect the first sensing electrode and the second sensing electrode.

2. The touch sensing apparatus of claim 1, wherein a plurality of first sensing electrodes exist, and a touch position on a window touched by a user is sensed based on touch signals respectively acquired from the plurality of first sensing electrodes.

3. The touch sensing apparatus of claim 1, further comprising:
a sensing unit to sense the touch based on a capacitance change, the capacitance change being generated by the touch in the first sensing electrode.

4. The touch sensing apparatus of claim 3, wherein the sensing unit and the buffer are configured in an integrated circuit having a single chip configuration.

5. The touch sensing apparatus of claim 1, wherein an input port of the buffer is connected to the first sensing electrode, an output port of the buffer is connected to the second sensing electrode, and the buffer has a gain that is greater than 0 and less than 1.

6. The touch sensing apparatus of claim 1, wherein the second sensing electrode is arranged in a same configuration as the first sensing electrode.

7. The touch sensing apparatus of claim 6, wherein the buffer and the second sensing electrode are individually included in each first sensing electrode.

8. The touch sensing apparatus of claim 1, wherein the second sensing electrode is superimposed onto at least two first sensing electrodes.

9. The touch sensing apparatus of claim 8, further comprising:
a switching unit to selectively connect one of the at least two first sensing electrodes to the input port of the buffer.

10. The touch sensing apparatus of claim 8, wherein the second sensing electrode is arranged to cover an entire area where the first sensing electrode is arranged.

11. A noise signal shielding apparatus for shielding against a noise signal with respect to at least one sensing electrode provided to sense a touch applied to a touch sensing panel, the noise signal shielding apparatus comprising:
an insulating layer arranged on a rear surface of the sensing electrode;
a shielding electrode arranged on a rear surface of the insulating layer; and
a buffer to transmit a voltage of the sensing electrode to the shielding electrode.

12. The noise signal shielding apparatus of claim 11, wherein an input port of the buffer is connected to the sensing electrode, an output port of the buffer is connected to the shielding electrode, and the buffer has a gain that is greater than 0 and less than 1.

13. The noise signal shielding apparatus of claim 11, wherein the shielding electrode is arranged in a same configuration as the sensing electrode.

14. The noise signal shielding apparatus of claim 11, wherein the shielding electrode is superimposed onto at least two sensing electrodes.

15. A touch sensing apparatus, comprising:
a first sensing electrode where a touch generates a sensing signal;
a second sensing electrode arranged adjacent to the first sensing electrode; and
a buffer to transmit a voltage of the first sensing electrode to the second sensing electrode.

16. The touch sensing apparatus of claim 15, wherein the second sensing electrode is arranged in a same layer as the first sensing electrode.

17. The touch sensing apparatus of claim 15, wherein the second sensing electrode is arranged in a different layer from the first sensing electrode.

18. The touch sensing apparatus of claim 17, wherein the second sensing electrode is superimposed onto the first sensing electrode, and is arranged in a different layer from the first sensing electrode.

19. The touch sensing apparatus of claim 15, wherein an input port of the buffer is connected to the first sensing electrode, an output port of the buffer is connected to the second sensing electrode, and the buffer has a gain that is greater than 0 and less than 1.

20. The touch sensing apparatus of claim 15, further comprising:
a sensing unit connected to the first sensing electrode, to sense a capacitance change, the capacitance change being generated by an access or a touch of a user to the first sensing electrode.
